(19) Europäisches Patentamt
European Patent Office
Office européen des brevets

(11) Veröffentlichungsnummer : **0 127 834**
**B1**

(12) # EUROPÄISCHE PATENTSCHRIFT

(45) Veröffentlichungstag der Patentschrift : **12.11.86**

(51) Int. Cl.⁴ : **C 09 J 3/14**, C 08 L 33/08, C 08 K 5/24

(21) Anmeldenummer : **84105828.2**

(22) Anmeldetag : **22.05.84**

(54) **Haftkleberdispersionen zur Herstellung selbstklebender Artikel z.B. mit polyolefinischen Trägern.**

(30) Priorität : **27.05.83 DE 3319240**

(43) Veröffentlichungstag der Anmeldung : **12.12.84 Patentblatt 84/50**

(45) Bekanntmachung des Hinweises auf die Patenterteilung : **12.11.86 Patentblatt 86/46**

(84) Benannte Vertragsstaaten : **AT BE CH DE FR GB IT LI NL SE**

(56) Entgegenhaltungen :
**EP-A- 0 003 516**
**EP-A- 0 005 167**
**DE-A- 1 495 706**
**US-A- 4 210 565**
**US-A- 4 230 772**
**Die Akte enthält technische Angaben, die nach dem Eingang der Anmeldung eingereicht wurden und die nicht in dieser Patentschrift enthalten sind.**

(73) Patentinhaber : **BASF Aktiengesellschaft**
**Carl-Bosch-Strasse 38**
**D-6700 Ludwigshafen (DE)**

(72) Erfinder : **Druschke, Wolfgang, Dr.**
**Berliner Strasse 28**
**D-6716 Dirmstein (DE)**
Erfinder : **Kast, Hans, Dr.**
**Kantstrasse 1**
**D-6800 Mannheim 1 (DE)**
Erfinder : **Zettl, Alexander**
**Homburger Strasse 5**
**D-6700 Ludwigshafen (DE)**

**EP 0 127 834 B1**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue St-Denis, 75001 Paris, France

**Beschreibung**

Zur Herstellung selbstklebender Artikel werden in zunehmendem Maß Haftklebstoffe aus synthetisch hergestellten Rohstoffen eingesetzt. Als Materialien, welche als Träger zur Herstellung solcher selbstklebender Artikel dienen, sind u. a. zu nennen : Papier sowie Folien aus Metall, Polyethylen, -propylen, -ethylenterephthalat oder PVC.

PE- und PP-Folien sind z. Zt. die preiswertesten Folien, die zudem von den Eigenschaften her (PE-Folie weich und dehnbar ; biaxial gereckte PP-Folie hart und hohe Reißfestigkeit) befriedigen. Daher bieten sich diese Polyolefinfolien geradezu für die Beschichtung mit selbstklebenden Massen an. Nachteilig ist jedoch die adhäsive Wirkung, die die Ausbildung einer ausreichenden Adhäsion von Beschichtungen, Druckfarben oder Klebstoffen verhindert. Es sind verschiedene Verfahren (Corona-Vorbehandlung, chemische Behandlung, Beflammung) bekannt, mit denen an den Polyolefinoberflächen polare Gruppen erzeugt werden, die dann eine gewisse Haftung ermöglichen. Vor allem die Corona-Vorbehandlung wird in der Praxis angewandt und es lassen sich damit auch für einige Anwendungen durchaus brauchbare Ergebnisse erzielen.

Für die Herstellung derartiger selbstklebender Artikel mit polyolefinischen Träger werden bis jetzt in der Praxis überwiegend Haftkleber-Lösungen auf Basis von Natur- oder Synthesekautschuk eingesetzt, die mit Weichharzen und/oder Weichmachern modifiziert sind und die einen weichen, stark klebrigen Film bilden. Zur Verbesserung der Haftung auf der polyolefinischen Oberfläche werden vor dem Aufbringen des Haftklebers Haftvermittler aufgebracht. Als Lösungsmittel werden z. B. Benzin, Toluol, Aceton, Ethylacetat eingesetzt. Die Herstellung derartiger Kleberlösungen ist technisch aufwendig, da beispielsweise die Naturkautschukanteile auf Walzstühlen oder Knetern mastifiziert und die Elastomeren unter Verwendung von Löseknetern oder Dissolvern in den organischen Lösungsmitteln gelöst werden müssen. Zudem handelt es sich bei den Lösungsmitteln um brennbare Stoffe, so daß bei der Verwendung der Klebstoff-Lösungen explosionsgeschützte Beschichtungsanlagen angewandt und Lösungsmittelrückgewinnungsanlagen nachgeschaltet werden müssen. Ein Nachteil derartiger üblicher Klebstoffe ist zudem vor allem ihre geringe Alterungsbeständigkeit, ein verhältnismäßig schnelles Vergrauen der Etikettenoberfläche durch Weichmacher-Migration, starker Haftungsanstieg auf unpolaren Oberflächen, z. B. aus Polyethylen, und Störungen beim Drucken und Stanzen der Etiketten durch Fadenziehen des Klebers.

Aus der DE-OS 30 18 131 ist es bekannt, Lösungen von Polyacrylsäureestern und Polyisocyanaten in organischen Lösungsmitteln zur Herstellung von abziehbaren Klebeetiketten einzusetzen, doch treten auch hierbei durch die Verwendung von organischen Lösungsmitteln Nachteile der oben genannten Art auf. Wegen des Gehalts an reaktiven Polyisocyanaten weisen Mischungen dieser Art zudem nur eine verhältnismäßig kurze Topfzeit auf, und die Klebewerte sind von der Luftfeuchtigkeit abhängig und daher schlecht reproduzierbar.

Die Nachteile, die bei der Verarbeitung von lösungsmittelhaltigen Klebern entstehen, können häufig durch den Einsatz wäßriger Polymer-Dispersionen vermieden werden. Man hat daher schon wäßrige Haftkleberdispersionen zur Herstellung von selbstklebenden Artikeln mit polyolefinischen Trägern eingesetzt. Solche Dispersionen üblicher weicher und klebriger Acrylatcopolymerer bringen für einige Anwendungen eine ausreichende Haftung. Bei anspruchsvollen Anwendungen und Anforderungen reicht jedoch die Verankerung auf der Folie nicht aus. So soll sich bei einem qualitativ hochwertigen Klebeband auch nach mehrmaligem Aufeinanderkleben und Abziehen von Klebstoffschicht auf Klebstoffschicht kein Ablösen von der Folie zeigen. Auch beim Abrollen eines Klebebandes nach verschiedenen Lagerbedingungen und unter verschiedenen Abzugsgeschwindigkeiten darf kein Klebstoffübertrag auf die Rückseite auftreten. Sehr wichtig für manche Anwendung ist auch die Forderung, daß sich ein Klebeband oder eine selbstklebende Folie nach längerer Verklebungszeit wieder rückstandsfrei von verschiedenen Oberflächen (Metall, Kunststoff, Glas usw.) abziehen läßt. Hinsichtlich dieser Anforderungen befriedigende Ergebnisse lassen sich jedoch mit den bisher üblichen Acrylatcopolymerdispersionen nicht erzielen.

Es wurde nun gefunden, daß Haftkleberdispersionen, bestehend aus

(A) einer 40 bis 70 %igen wäßrigen Dispersion eines Copolymerisats A einer Glastemperatur unter 0 °C aus

(a) 50 bis 99 Gew.-% von einem oder mehreren Acrylsäureestern 4 bis 8 C-Atome enthaltender nicht tertiärer Alkanole,

(b) 0 bis 50 Gew.-% Acryl- oder Methacrylsäureester 1 bis 3 C-Atome enthaltender Alkanole und/oder Vinylester 2 bis 4 C-Atome enthaltender Carbonsäuren und/oder (Meth)Acrylnitril und/oder Styrol und/oder tert.-Butylacrylat,

(c) 0,5 bis 5 Gew.-% an 3 bis 5 C-Atomen enthaltenden monoolefinisch ungesättigten Mono- und/oder Dicarbonsäuren und/oder deren gegebenenfalls an den Stickstoffatomen durch 1 bis 4 C-Atome enthaltende Alkyl- und/oder Alkylolreste substituierten Amiden und/oder Hydroxyalkyl(meth)acrylaten mit 2 bis 5 C-Atomen in den Alkylgruppen und

(d) 0,5 bis 5 Gew.-% an Carbonylgruppen aufweisenden Monomeren, wobei die Mengen (a)-(d) sich in jedem fall auf 100 % addieren müssen, und

(B) je Mol in den Copolymerisaten A enthaltenden Carboxylgruppen 0,05 bis 2 Mol wasserlöslichen aliphatische Dihydrazin-Verbindungen
sehr gute Haftung auf polyolefinischen Oberflächen zeigen und sich solche Dispersionen deshalb insbesondere für die Herstellung selbstklebender Artikel mit polyolefinischen Trägern, z. B. Protective Films, Klebebänder und Klebefolien eignen.

Die Umsetzung von carboxylgruppen-haltigen Polymeren mit mehrfunktionellen Hydrazinderivaten wurde als Verfahren zur Herstellung vernetzter Polymerisate bereits in mehreren Patentschriften beschrieben. Gemäß den Angaben in der US-Patentschrift 3 345 336 werden ketogruppen-haltige Polymerisate mit mehrfunktionellen Carbonsäurehydraziden umgesetzt; in der US-Patentschrift 4 210 565 wird die Vernetzung von aldehydgruppen-haltigen Polymerisaten mit mehrfunktionellen Carbonsäurehydraziden oder -hydrazonen beschrieben; die EP-Patentschrift 3516 zeigt, daß carbonylgruppen-haltige Copolymerisate allgemein mit mehrfunktionellen organischen Hydrazinderivaten in Gegenwart von Schwermetallsalzen vernetzt werden können. Derartige Polymerisate zeichnen sich dadurch aus, daß sie durch die Vernetzung in organischen Lösungsmitteln unlöslich werden. Sie werden deshalb bevorzugt als Bindemittel für Anstrichstoffe und Beschichtungen (EP-Patentschrift 5167) sowie als Bindemittel für Faservliese eingesetzt.

Polymerisate, die auf diese Weise vernetzt sind, sind im allgemeinen für die Herstellung von Haftklebstoffen wenig geeignet, da durch die Vernetzung die Oberflächenklebrigkeit — die wesentliche Eigenschaft derartiger Systeme — erheblich vermindert wird.

Die im vorliegenden Fall gefundene vorzügliche Haftung der Klebefilme, hergestellt aus den beschriebenen Komponenten auf Trägerfolien, steht in keinem Zusammenhang mit der bekannten Vernetzung des Polymeren durch kovalente Verknüpfung der Polymerketten untereinander: weisen doch Polymere ähnlicher Zusammensetzung, die mit Hilfe anderer reaktiver Komponenten vernetzt sind, keine brauchbare Haftung auf Trägerfolien auf (siehe Vergleichsbeispiel 21). Darüber hinaus wurde der günstige Einfluß der Kombination von carbonylgruppen-haltigen Polymeren mit mehrfunktionellen Hydrazinderivaten auf die Haftung selbst bei erheblichen Abweichungen der Zusammensetzung von dem für die Vernetzung optimalen äquimolaren Verhältnis der Carbonylgruppen zu den Hydrazingruppen beobachtet (siehe Beispiel 3), unter Bedingungen also, die einer Vernetzung geradezu abträglich sind. Die neuen Haftkleberdispersionen ergeben somit Haftklebebeschichtungen mit überraschenden Eigenschaften.

Die wäßrigen Dispersionen des Copolymerisats A können in an sich üblicher Weise durch Copolymerisation der Monomeren in wäßriger Emulsion unter Verwendung der üblichen Emulgier- und Dispergierhilfsmittel hergestellt sein und haben eine Konzentration an Copolymerisat A von 40 bis 70 Gew.-%. Als Emulgier- und Dispergierhilfsmittel enthalten sie meist 0,2 bis 3 Gew.-%, bezogen auf die Menge des Copolymerisats A, anionische und/oder nichtionische Emulgatoren, wie Natriumdialkylsulfosuccinate, Natriumsalze von sulfatierten Ölen, Natriumsalze von Alkylsulfonsäuren, Natrium-, Kalium- und Ammoniumalkylsulfate, Alkalisalze von Sulfonsäure, Alkalisalze von oxalkylierten $C_{12}$- bis $C_{24}$-Fettalkoholen und von oxalkylierten Alkylphenolen, sowie Polyadditionsprodukte von Alkylenoxiden, wie besonders Ethylenoxid und/oder Propylenoxid an Fettsäuren, Fettalkohole, Fettamide und/oder Alkylphenole, ferner Natriumsalze von Fettsäuren, wie Natriumstearat und Natriumoleat. Die Copolymerisate A haben eine Glastemperatur von unter 0 °C, vorzugsweise von — 40 bis — 10 °C, wobei die Glastemperatur nach üblichen Methoden, z. B. aus der Messung des E-Moduls im Kriechversuch als Funktion der Temperatur oder mit der DTA (= Differentialthermoanalyse) bestimmt sein können.

Die Copolymerisate enthalten als weiche Comonomere (a) vorzugsweise 2-Ethylhexylacrylat und/oder Isooctylacrylat und/oder n-Butylacrylat, doch sind auch solche gut geeignet, die als Comonomere (a) Isobutylacrylat, Hexylacrylat und/oder n-Octylacrylat einpolymerisiert enthalten.

Als Comonomere (b) enthalten die Copolymerisate A Ester auch Acryl- und/oder Methacrylsäure und 1 bis 3 C-Atome enthaltenden Alkanolen, wie Methanol, Ethanol, Isopropylalkohol, n-Propanol und/oder Vinylester 2 bis 4 C-Atome enthaltenden Carbonsäuren, wie Vinylacetat, Vinylpropionat und Vinyl-n-butyrat und/oder (Meth)Acrylnitril und/oder Styrol und/oder dessen alkylsubstitutierte Derivate und/oder t-Butylacrylat einpolymerisiert.

Als Comonomere (c) enthalten die Copolymerisate A 0,5 bis 5, vorzugsweise 1 bis 4 % ihres Gewichts an z. B. Acrylsäure, Methacrylsäure, Maleinsäure, Acrylamid, Methacrylamid, N-Methylacrylamid, N-Isobutylacrylamid, N-Methylmethacrylamid, N-Methylolacrylamid, N-Methylolmethacrylamid, N-Ethoxymethylacrylamid, N-Butoxymethylacrylamid, N-Isopropoxyethacrylamid, 2-Hydroxyethylacrylat und -methacrylat, 4-Hydroxybutylacrylat und -methacrylat, Hydroxypropylacrylat und -methacrylat einpolymerisiert.

Charakteristisch für die Copolymerisate A ist ihr Gehalt von 0,5 bis 5 % ihres Gewichtes an einpolymerisierten, Carbonylgruppen aufweisenden Monomeren. Carbonylgruppen aufweisende Monomere im Sinne der Erfindung sind nicht z. B. Ester, wie Ethylacrylat oder Vinylacetat oder Amide, wie Acrylamid oder Carbonsäuren, wie Acrylsäure, sondern Monomere mit mindestens einer Aldo- oder Keto-Gruppe und einer polymerisierbaren Doppelbindung. Von besonderem Interesse sind Acrolein, Diacetonacrylamid, Formylstyrol, Vinylalkylketone mit vorzugsweise 4 bis 7 C-Atomen, wie besonders Vinylmethylketon, Vinylethylketon und Vinylisobutylketon und/oder (Meth)acryloxy-alkylpropanole der allgemeinen Formel (I)

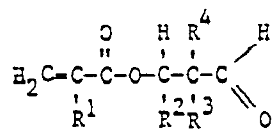

in der $R^1$ für —H oder —$CH_3$, $R^2$ für —H oder einen 1 bis 3 C-Atome enthaltenden Alkylrest, $R^3$ für einen 1 bis 3 C-Atome enthaltenden Alkylrest und $R^4$ für einen 1 bis 4 C-Atome enthaltenden Alkylrest stehen. Derartige (Meth)acryloxyalkylpropanale können nach dem Verfahren der GB-PS 1 601 077 durch Veresterung von β-Hydroxyalkylpropanalen der allgemeinen Formel (II)

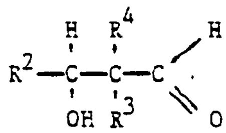

in der $R^2$, $R^3$ und $R^4$ die für die allgemeine Formel (I) angegebene Bedeutung haben, in Gegenwart von indifferenten Verdünnungsmitteln sowie geringen Mengen Sulfonsäuren und Mineralsäuren bei Temperaturen von 40 bis 120, insbesondere von 60 bis 90 °C hergestellt sein. Als Ketogruppen tragende Monomeren kommen ferner Diacetonacrylat, Acetonylacrylat, Diaceton(meth)acrylat, 2-Hydroxypropylacrylat-acetylacetat und Butandiol-1,4-acrylat-acetylacetat in Frage. Die Menge der Carbonyl- bzw. Ketogruppen aufweisenden einpolymerisierten Comonomeren (d) beträgt vorzugsweise 1 bis 5 Gew.-%, bezogen auf die Copolymerisate A.

Die neuen Haftkleberdispersionen enthalten je Mol der in den Copolymerisaten A enthaltenen Carbonyl- bzw. Ketogruppen 0,05 bis 2, vorzugsweise 0,5 bis 1,5 Mol wasserlösliche Dihydrazin-Verbindungen. Geeignete Dihydrazin-Verbindungen B sind vor allem Dihydrazide aliphatischer 2 bis 10, insbesondere 4 bis 6 C-Atome enthaltender Dicarbonsäuren, wie Oxalsäuredihydrazid, Malonsäuredihydrazid, Bernsteinsäuredihydrazid, Glutarsäuredihydrazid, Adipinsäuredihydrazid, Sebazinsäuredihydrazid, Maleinsäuredihydrazid, Fumarsäuredihydrazid und/oder Itaconsäuredihydrazid. Geeignet sind ferner wasserlösliche aliphatische, 2 bis 4 C-Atome aufweisende Dihydrazine, wie Ethylen-1,2-dihydrazin, Propylen-1,3-dihydrazin und Butylen-1,4-dihydrazin.

Als Zusätze können die neuen Haftkleberdispersionen übliche Mengen an Verdickungsmitteln, Stabilisatoren, Netzmitteln, Hydrophobierungsmitteln, Weichmachern, klebrigmachende Harzen und/oder Pigmenten enthalten. Die Haftkleber können ein- oder zweiseitig auf die Substrate in an sich üblicher Weise, z. B. durch Spritzen, Rakeln, Rollen, Gießen, Walzen oder Tauchen aufgetragen werden. Auch ein indirekter Auftrag der Haftkleber, z. B. nach dem Transferverfahren unter Mitverwendung eines siliconisierten Papiers, ist möglich. Nach dem Auftrag der Kleber werden die beschichteten Substrate in üblicher Weise getrocknet.

Außer zur Herstellung von Klebebändern und -folien mit polyolefinischem Träger, für die die neuen Haftkleber vorgezogen werden, können sie zur Herstellung von Klebeetiketten oder anderen selbstklebenden Artikeln eingesetzt werden. Als Träger kommen außer Folien aus Polyolefinen, wie Polyethylen und Polypropylen, auch Folien aus Polyethylenglykolterephthalat, PVC und Metall sowie Papier in Betracht.

In den folgenden Beispielen werden zur Klebeprüfung die Haftkleber mit einer Trockenschichtdicke von ca. 20 g/m² auf in üblicher Weise coronavorbehandelte Polypropylen-Folie (40 µm) gerakelt und die beschichteten Folien 3 Minuten bei 70 °C im Trockenschrank getrocknet. Die beschichteten Folien wurden dann in 2 cm breite Prüfstreifen geschnitten.

Zur Bestimmung der Kohäsion werden die Klebestreifen in 2 cm Länge auf ein V2A-Prüfblech geklebt, 24 Stunden gelagert und anschließend im Hängen bei 50 °C mit einem 1 kg-Gewicht belastet. Maßstad der Scherfestigkeit ist die Zeit bis zum Abfallen des Gewichts.

Bei der Bestimmung des Schälfestigkeit wird der Klebestreifen auf eine verchromte Messingplatte aufgebracht und nach 10 Minuten Verklebungszeit in einer Zug-Dehnungs-Prüfapparatur bei 23 °C im Winkel von 180° mit einer Geschwindigkeit von 300 mm/min abgezogen. Es wird als Maß der Schälfestigkeit die Kraft in N bei den 2 cm breiten Streifen angegeben.

Die Haftung auf der polyolefinischen Oberfläche wird wie folgt beurteilt:

Träger: Polyethylenfolie, 100 µm, frisch coronavorbehandelt
Auftrag: 7 g/m² fest
Trocknung: 60 Sekunden bei 70 °C
Prüfungen: Klebeschicht gegen Klebeschicht
Abreiben der Klebstoffschicht von Hand
Abreiben der Klebstoffschicht nach 5 Sekunden Wasserlagerung

alle Prüfungen wurden durchgeführt nach 24 Stunden Lagerung bei 23 °C und nach 2 Stunden Lagerung bei 80 °C
Beurteilung : 1 = gute Haftung der Klebstoffschicht auf der Folie
4 = sehr schlechte Haftung der Klebstoffschicht auf der Folie

Herstellung der Polymerdispersionen :

In einem Reaktionsgefäß mit Rührer und Zulaufgefäßen werden 22e Wasser, 0,5 Gew.-Teile Kaliumperoxidisulfat, 0,5 Gew.-Teile des Natriumsalzes eines Umsetzungsproduktes von Isooctylphenol mit 25 Mol Ethylenoxid und 25 Gew.-Teile der jeweiligen Monomermischung (entsprechend der Zusammensetzung von Tabelle 1) auf 85 °C erhitzt. Nach 15 Minuten beginnt man den über 2 Stunden gleichmäßigen Zulauf einer Emulsion aus 200 Gew.-Teilen Wasser, 9,5 Gew.-Teilen des zuvor angegebenen Emulgators und 475 Gew.-Teilen der Monomermischung. Gleichzeitig werden in einem separaten Zulauf 2 Gew.-Teile Kaliumperoxidisulfat in 80 Gew.-Teilen Wasser gelöst zugegeben. Anschließend wird der Inhalt des Reaktionsgefäßes noch 1 Stunde bei 85 °C gehalten.

Nach dem Abkühlen wird die erhaltene Dispersion mit 25 %igem Ammoniak neutralisiert ; dann wird die im jeweiligen Beispiel (siehe Tabelle 1) angegebene Menge Adipinsäuredihydrazid in 30 Gew.-Teilen Wasser hinzugefügt.

Beispiele und Vergleichsversuche

Tabelle 1

| Beispiel Nr. | Zusammensetzung in Gew.-% | Menge ADH in Gew.-Teilen |
|---|---|---|
| 1 (Vergleich) | 64,5 BA, 30 EHA, 3 AN, 1 AS, 1,5 DAAM | - |
| 2 | wie 1 | 3,8 |
| 3 | wie 1 | 5,7 |
| 4 (Vergleich) | 88 BA, 7 VAc, 2 AS, 3 DAAM | - |
| 5 | wie 4 | 7,5 |
| 6 (Vergleich) | 90 EHA, 6 AN, 1 AS, 3 MAc | - |
| 7 | wie 6 | 9,0 |
| 8 | wie 6 | 18,0 |
| 9 (Vergleich) | 39 BA, 50 EHA, 5 S, 2 AS, 4 DAAM | - |
| 10 | wie 9 | 5,0 |
| 11 | wie 9 | 10,0 |
| 12 (Vergleich) | 29 BA, 69 EHA, 5 MMA, 3 AS, 4 DAAM | - |
| 13 | wie 12 | 5,0 |
| 14 | wie 12 | 10,0 |
| 15 (Vergleich) | 88 EHA, 5 S, 2 AS, 5 DAAM | - |
| 16 | wie 15 | 6,3 |
| 17 | wie 15 | 12,5 |
| 18 (Vergleich) | 91 BA, 2 MMA, 2 AS, 5 MAc | - |
| 19 | wie 18 | 15,5 |
| 20 | wie 18 | 31,0 |
| 21 (Vergleich) | 93 BA, 3 AN, 1 AS, 3 MAMol | - |

Die mit den Haftkleber-Dispersionen erhaltenen Meßergebnisse sind in den folgenden Tabellen 2 und 3 zusammengestellt.

Abkürzungen : ADH = Adipinsäuredihydrazid
AN = Acrylnitril
AS = Acrylsäure
BA = n-Butylacrylat
DAAM = Diacetonacrylamid
EHA = 2-Ethylhexylacrylat

MAc = Methacrolein
MMA = Methylmethacrylat
S = Styrol
VAc = Vinylacetat
MAMol = N-Methylolmethacrylamid

Tabelle 2

Ergebnisse der Klebeprüfungen

| Beispiel Nr. | Schälfestigkeit (N/2 cm) | Kohäsion (Std.) |
|---|---|---|
| 1 (Vgl.) | 2,8 A | 30 K |
| 2 | 0,7 A | 48 |
| 3 | 0,6 A | 48 |
| 4 (Vgl.) | 15,9 K | 1 K |
| 5 | 1,3 A | 48 |
| 6 (Vgl.) | 2,8 A | 48 |
| 7 | 0,6 A | 1 A |
| 8 | 0,5 A | 0,5 A |
| 9 (Vgl.) | 4,2 A | 31 K |
| 10 | 0,6 A | 48 |
| 11 | 0,4 A | 48 |
| 12 (Vgl.) | 5,0 A | 40 K |
| 13 | 0,6 A | 48 |
| 14 | 0,4 A | 48 |
| 15 (Vgl.) | 3,8 A | 100 K |
| 16 | 0,7 A | 48 |
| 17 | 0,6 A | 48 |
| 18 (Vgl.) | 2,2 A | 48 |
| 19 | 0,6 A | 20 A |
| 20 | 0,2 A | 6 A |
| 21 (Vgl.) | 2,5 A | 5 K |

A = Adhäsionsbruch
K = Kohäsionsbruch

(Siehe Tabelle 3 Seite 7 f.)

Tabelle 3

Ergebnisse der Haftungs-Prüfungen

| Beispiel Nr. | Prüfung nach 24 Std. Lagerung bei 23°C: Schicht/Schicht | Prüfung nach 24 Std. Lagerung bei 23°C: Abreiben von Hand | Prüfung nach 24 Std. Lagerung bei 23°C: Abreiben nach 5 s Wasserlagerung | Prüfung nach 2 Std. Lagerung bei 80°C: Schicht/Schicht | Prüfung nach 2 Std. Lagerung bei 80°C: Abreiben von Hand | Prüfung nach 2 Std. Lagerung bei 80°C: Abreiben nach 5 s Wasserlagerung |
|---|---|---|---|---|---|---|
| 1 (Vgl.) | 4 | 4 | 4 | 4 | 4 | 4 |
| 2 | 1 | 1 | 1 | 1 | 1 | 1 |
| 3 | 1 | 1 | 1 | 1 | 1 | 1 |
| 4 (Vgl.) | 4 | 4 | 4 | 4 | 4 | 4 |
| 5 | 1 | 1 | 1-2 | 1 | 1 | 1-2 |
| 6 (Vgl.) | 3 | 3 | 3 | 3 | 3 | 3 |
| 7 | 1 | 1 | 2 | 1 | 1 | 2 |
| 8 | 1 | 1 | 2 | 1 | 1 | 1 |
| 9 (Vgl.) | 4 | 4 | 4 | 4 | 3 | 4 |
| 10 | 1 | 1 | 1-2 | 1 | 1 | 1 |
| 11 | 1 | 1 | 1 | 1 | 1 | 1 |
| 12 (Vgl.) | 4 | 4 | 4 | 4 | 4 | 4 |
| 13 | 1 | 1 | 1-2 | 1 | 1 | 1-2 |
| 14 | 1 | 1 | 1-2 | 1 | 1 | 1 |
| 15 (Vgl.) | 4 | 3 | 3 | 4 | 4 | 3 |
| 16 | 1 | 1 | 2 | 1 | 1 | 1-2 |
| 17 | 1 | 1 | 1-2 | 1 | 1 | 1 |
| 18 (Vgl.) | 3 | 4 | 4 | 4 | 3 | 4 |
| 19 | 1 | 1 | 2 | 1 | 1 | 2 |
| 20 | 1 | 1 | 2 | 1 | 1 | 2 |
| 21 (Vgl.) | 4 | 4 | 3-4 | 4 | 4 | 4 |

**Patentanspruch**

Haftkleberdispersionen zur Herstellung selbstklebender Artikel, bestehend aus

(A) einer 40 bis 70 %igen wäßrigen Dispersion eines Copolymerisats A einer Glastemperatur unter 0 °C aus

(a) 50 bis 99 Gew.-% eines oder mehrerer Acrylsäureester 4 bis 8 C-Atome enthaltender nicht tertiärer Alkanole,

(b) 0 bis 50 Gew.-% Acryl- oder Methacrylsäureester 1 bis 3 C-Atome enthaltender Alkanole und/oder Vinylester 2 bis 4 C-Atome enthaltender Carbonsäuren und/oder (Meth)Acrylnitril und/oder Styrol und/oder tert.-Butylacrylat

(c) 0,5 bis 5 Gew.-% 3 bis 5 C-Atome enthaltenden monoolefinisch ungesättigten Mono- und/oder Dicarbonsäuren und/oder deren gegebenenfalls an den Stickstoffatomen durch 1 bis 4 C-Atome enthaltende Alkyl- und/oder Alkylolreste substituierten Amiden und/oder Hydroxyalkyl(meth)acrylaten mit 2 bis 5 C-Atomen in den Alkylgruppen und

(d) 0,5 bis 5 Gew.-% an Carbonylgruppen aufweisenden Monomeren, wobei die Mengen (a)-(d) sich in jedem fall auf 100 % addieren müssen, und

(B) je Mol in den Copolymerisaten A enthaltenden Carbonylgruppen 0,05 bis 2 Mol wasserlöslichen Dihydrazin-Verbindungen.

**Claim**

A contact adhesive dispersion for the production of self-adhesive articles, which comprises

(A) a 40 to 70 % strength aqueous dispersion of a copolymer A which has a glass transition temperature below 0 °C and consists of

(a) from 50 to 99 % by weight of one or more esters of acrylic acid with non-tertiary alkanols of 4 to 8 carbon atoms,

(b) from 0 to 50 % by weight of esters of acrylic or methacrylic acid with alkanols of 1 to 3 carbon atoms and/or vinyl esters of carboxylic acids of 2 to 4 carbon atoms and/or (meth)acrylonitrile and/or styrene and/or tert.-butyl acrylate,

(c) from 0.5 to 5 % by weight of monoolefinically unsaturated mono- and/or dicarboxylic acids of 3 to 5 carbon atoms and/or their amides which are unsubstituted or substituted at the nitrogen atoms by alkyl and/or alkylol radicals of 1 to 4 carbon atoms, and/or hydroxyalkyl (meth)acrylates, where alkyl is of 2 to 5 carbon atoms, and

(d) from 0.5 to 5 % by weight of carbonyl-containing monomers, the amounts of (a) to (d) adding up to 100 %, and

(B) from 0.05 to 2 moles of a water-soluble aliphatic dihydrazine compound per mole of carbonyl groups present in the copolymer A.

**Revendication**

Dispersions d'adhésifs pour la fabrication d'articles autocollants, se composant de :

(A) une dispersion aqueuse à 40-70 % d'un copolymère A ayant une température de verre inférieure à 0 °C et formé de :

(a) 50 à 99 % en poids d'un ou de plusieurs esters d'acide acrylique et d'alcanols non tertiaires contenant 4 à 8 atomes de C,

(b) 0 à 50 % en poids d'esters d'acide acrylique ou méthacrylique et d'alcanols contenant 1 à 3 atomes de C et/ou d'esters vinyliques d'acides carboxyliques contenant 2 à 4 atomes de C et/ou de (méth)acrylonitrile et/ou de styrène et/ou d'acrylate de butyle tertiaire,

(c) 0,5 à 5 % en poids d'acides mono- et/ou dicarboxyliques mono-oléfiniquement insaturés contenant 3 à 5 atomes de C et/ou de leurs amides éventuellement substitués sur les atomes d'azote par des radicaux alkyle ou alkylol contenant 1 à 4 atomes de C et/ou de (méth)acrylates d'hydroxyalkyle à 2-5 atomes de C dans les groupes alkyle et

(d) 0,5 à 5 % en poids de monomères comportant des groupes carbonyle, la somme des quantités de (a) et (d) devant être égale à 100 % dans tous les cas, et de :

(B) 0,05 à 2 mol de composés de dihydrazine solubles dans l'eau par mol de groupes carbonyle contenus dans le copolymère A.